# EUROPÄISCHE PATENTANMELDUNG

(11) **EP 1 388 489 A1**
(43) Veröffentlichungstag der Anmeldung: **11.02.2004**
(21) Anmeldenummer: 03015370.4
(22) Anmeldetag: 08.07.2003
(51) Int. Cl.: B62H 5/00, B62H 5/18

(54) **Abschliessbare Zweiradstütze**

(30) Priorität: 07.08.2002 DE 10236247
(71) Anmelder: Biria AG, 68535 Edingen-Neckarhausen (DE)
(72) Erfinder: Biria, Mehdi, 68535 Edingen-Neckarhausen (DE)
(74) Vertreter: Böck, Bernhard, Dipl.-Ing.

(57) **Zusammenfassung**

Die Erfindung betrifft eine Stützeinrichtung (5) mit ausklappbarer Seitenstütze (6) zum Parken von Zweirädern, beispielsweise von Fahrrädern.

Erfindungsgemäß zeichnet sich die Stützeinrichtung (5) durch eine Schließeinrichtung (7) zum diebstahlschützenden Verriegeln der Seitenstütze (6) in deren ausgeklappten Stellung aus.

Dank der Erfindung ist es möglich, den reinen Abstellvorgang des Zweirads mit einer durch die Verriegelung der Seitenstütze im ausgeklappten Zustand erzielten Wegfahrsperre zu kombinieren. Damit wird ein entscheidender Beitrag zu Abschreckung und Verringerung der Häufigkeit von Zweiraddiebstählen geleistet, und es wird der Komfort bei der Nutzung des Zweirads im Alltag gleichzeitig in erheblichem Maß verbessert.

## Beschreibung

Die Erfindung betrifft eine Stützeinrichtung zum Abstellen bzw. Parken von Zweirädern gemäß dem Oberbegriff des Patentanspruchs 1.

Zweiradstützen der eingangs genannten Art werden aufgrund der einspurigen Bauweise von Zweirädern benötigt, um Zweiräder jederzeit auch unabhängig von Abstelleinrichtungen parken bzw. abstellen zu können.

Hierzu wird zumeist im Bereich des stärker gewichtsbelasteten Hinterrades bzw. im Bereich unmittelbar vor dem Hinterrad eine Stützeinrichtung am Rahmen des Zweirads angebracht, die zumindest eine ausklappbare Seitenstütze aufweist. Zum Abstellen des Zweirades wird die Seitenstütze ausgeklappt und bildet im ausgeklappten Zustand sodann mit ihrem unteren Ende den zum freistehenden Abstellen eines Zweirades erforderlichen dritten Bodenaufstandspunkt.

Der Einsatzbereich und die Einsatzweise von Zweirädern, insbesondere von Fahrrädern, liegt bezüglich der zurückgelegten Entfernungen häufig zwischen dem Aktionsradius eines Fußgängers und demjenigen von öffentlichen Verkehrsmitteln bzw. Kraftfahrzeugen. Dabei wird insbesondere mit dem Fahrrad im Rahmen einer einzelnen Fahrt jedoch sehr oft eine Mehrzahl unterschiedlicher Fahrtziele angesteuert bzw. eine Mehrzahl von Zwischenstopps eingelegt. So zeigt die Erfahrung, dass beispielsweise Fahrradfahrer, die mit dem Fahrrad zur Arbeit pendeln, zum Beispiel auf dem Rückweg von der Arbeit nach Hause gerne noch einen oder mehrere Zwischenstopps einlegen, beispielsweise um auf diese Weise noch spontane oder geplante Besorgungen oder kleinere Einkäufe erledigen zu können.

Dabei bringt es die vorteilhafte Eigenschaft eines Zweirades, insbesondere des Fahrrads, überall und jederzeit unkompliziert und platzsparend abgestellt werden zu können, mit sich, dass das Zweirad bei solchen zumeist rasch erledigten Besorgungen oft unmittelbar am Ort der Besorgung bzw. vor dem Geschäft abgestellt wird. Auf diese Weise lässt sich insbesondere bei städtischen Besorgungen gegenüber den öffentlichen Verkehrsmitteln bzw. gegenüber dem Kraftfahrzeug vieles an andernfalls notwendiger Zugangszeit einsparen, und es kann unmittelbar nach erledigter Besorgung direkt vom Geschäft weg die Fahrt, beispielsweise nach Hause, fortgesetzt werden.

Es hat jedoch in den vergangenen Jahren die Zahl der Zweiraddiebstähle dramatisch zugenommen. Dies hängt unter anderem damit zusammen, dass sich insbesondere bei Fahrrädern die Angebotsvielfalt und -qualität ganz erheblich verbessert hat, und dass die Verbraucher inzwischen bereit sind, für hochqualitative Fahrräder Preise im Bereich der gehobenen Konsumgüter zu bezahlen. Es ist damit für den Verbraucher notwendig geworden, beim Abstellen von Zweirädern, insbesondere von Fahrrädern, im öffentlichen Raum, stets für einen angemessenen und wirksamen Diebstahlschutz zu sorgen, um sein Eigentum so zu schützen.

Hierzu sind im Zubehörhandel breite Sortimente an hochwertigen Zweiradschlössern vorhanden, mit denen Zweiraddiebstahl bei richtiger Anwendung mit großer Sicherheit ausgeschlossen werden kann. Dies setzt jedoch voraus, dass derartige Zweiradschlösser, wie beispielsweise die beliebten Stahlbügel- oder Spiralkabelschlösser, korrekt angewendet und eingesetzt werden. Hierzu muss im Allgemeinen das Schloss zunächst aus einem eigens zu entriegelnden Halter am Zweiradrahmen entnommen werden, das Schloss sodann mittels Schlüssel geöffnet, zumindest um den Zweiradrahmen sowie um eines der Räder bzw. um einen festen Gegenstand, wie beispielsweise einen Geländerpfosten, herumgeführt werden, und schließlich das Schloss wieder eingerastet und durch Abziehen des Schlüssels verriegelt werden. Der gesamte aufwändige Ablauf fällt vor dem erneuten Fahrtantritt, diesmal in der umgekehrten Reihenfolge, erneut an.

Insbesondere bei den beschriebenen kurzen Zwischenstopps und raschen Besorgungen bzw. Einkäufen steht der Zweiradbesitzer dabei jedes Mal neu vor der Frage, ob er für einen vielleicht nur wenige Minuten dauernden Zwischenstopp die gesamte Prozedur des Ab- und Wiederaufschließens auf sich nehmen soll, oder ob er das Risiko eingehen soll, sein Zweirad für einige Minuten ungesichert beispielsweise vor einem Geschäft stehen zu lassen. Die Erfahrung zeigt, dass allzu häufig nach der zweiten Variante verfahren wird, was dazu führt, dass auch Besitzer von hochwertigen und teuren Zweirädern zunehmend häufig Opfer von Zweiraddieben werden, die sich gerade die beschriebene Situation zunutze machen.

Mit diesem Hintergrund ist es Aufgabe der vorliegenden Erfindung, einen Weg zu finden, wie der Zugriff von Unbefugten und Dieben auf Zweiräder verhindert werden kann, insbesondere wenn Zweiräder für eine verhältnismäßig kurze Zeitdauer, zum Beispiel bei Zwischenstopps oder Einkäufen, im öffentlichen Raum abgestellt werden. Dabei soll insbesondere die Anzahl der für die Sicherung des Zweirades notwendigen Handgriffe gegenüber den bekannten Schlosssystemen ganz entscheidend verringert werden, und es soll der Zweiradbesitzer aus dem beschriebenen Entscheidungsdilemma "Sicherheit und Zeitaufwand gegenüber Zeitgewinn und Diebstahlgefahr" herausgeführt werden.

Diese Aufgabe wird durch eine Stützeinrichtung mit den Merkmalen des Patentanspruchs 1 gelöst.

Bevorzugte Ausführungsformen der Erfindung sind Gegenstand der Unteransprüche.

Die der vorliegenden Erfindung zugrunde liegende Aufgabe wird dadurch gelöst, dass zur Anbringung am Zweirad eine an sich zunächst bekannte Stützeinrichtung mit ausklappbarer Stütze vorgesehen wird, wobei sich die Stützeinrichtung erfindungsgemäß jedoch dadurch auszeichnet, dass sie eine Schließeinrichtung für das Verriegeln bzw. Abschließen der Stütze in ihrer ausgeklappten Stellung, zum Schutz des Zweirads vor Diebstahl bzw. vor unbefugter Benutzung, aufweist. Der durch eine so ausgebildete Stützeinrichtung erzielte Schutz vor Diebstahl bzw. vor unbefugter Benutzung des Zweirads entsteht dadurch, dass ein Zweirad mit ausgeklappter Seitenstütze nicht mehr fahrbar ist. Denn die ausgeklappt verriegelte Seitenstütze verhindert einerseits die notwendige Kurvenneigung beim Fahren des Zweirads und verunmöglicht andererseits die zur Benutzung insbesondere beim Fahrrad erforderliche Kreisbewegung der Pedale wegen Überschneidung von Pedalkurbel und Seitenstütze.

Eine in ihrer ausgeklappten Stellung mittels Schließeinrichtung verriegelte Seitenstütze ist somit bereits aufgrund der beschriebenen Wirkungen ein wirksamer Schutz insbesondere gegen den schnellen Zugriff Unbefugter auf ein ansonsten ungesichertes Zweirad. Hinzu kommt der Überraschungs- bzw. Verblüffungseffekt beim versuchten Zugriff auf ein solchermaßen durch die verriegelte Seitenstütze gesichertes Zweirad, bei dem zum Scheitern verurteilten Versuch des Unbefugten, die Seitenstütze einzuklappen, um so mit dem Zweirad schnell das Weite suchen zu können. Insgesamt ergibt sich mit der erfindungsgemäßen Seitenstütze somit ein äußerst wirksamer Abschreckungs- und Sicherungseffekt, insbesondere beim kurzfristigen Abstellen von Zweirädern im öffentlichen Raum.

Vom Standpunkt der statistischen Diebstahlwahrscheinlichkeit über die Lebensdauer eines Zweirads aus betrachtet, sowie unter Komfortgesichtspunkten kommt jedoch noch hinzu, dass, wie dies gemäß einer besonders bevorzugten Ausführungsform der Erfindung vorgesehen ist, die Schließeinrichtung der Stütze so ausgebildet werden kann, dass die diebstahlschützende Verriegelung der Stütze beim Ausklappen selbsttätig erfolgt und dass die Stütze nach dem Ausklappen somit nicht eigens manuell abgeschlossen werden muss. Dies bedeutet mit anderen Worten, dass das Zweirad ohne jeglichen zusätzlichen Handgriff bereits lediglich durch den Vorgang des Abstellens selbst gesichert wird und damit vor Diebstahl geschützt ist. So wird auch das beschriebene Dilemma vollständig beseitigt, das für den Zweiradfahrer in der bei jedem Zwischenstopp und bei jedem kurzfristigen Abstellen des Zweirads erneut auftretenden Entscheidungsnotwendigkeit für oder gegen das Abschließen besteht. Anstelle des bisher oft gewählten Risikoweges beim Abstellen des Zweirads, ohne dieses abzuschließen, wird so nur durch das Abstellen selbst stets automatisch für effektiven Diebstahlschutz gesorgt.

Gemäß einer weiteren bevorzugten Ausführungsform der Erfindung ist die ausklappbare Stütze zweibeinig ausgeführt. Dies bringt einerseits einen besonders wirksamen Diebstahlschutz dadurch mit sich, dass das Zweirad beim Abstellen mittels Zweibeinstütze nur noch mit einem der beiden Räder sowie mit den beiden Stützenenden den Boden berührt, wodurch es gänzlich unbenutzbar wird, solange die Stütze ausgeklappt ist. Zum anderen liegt der Vorteil einer zweibeinig ausgeführten Stütze darin, dass auch ein gepäckbeladenes Zweirad auf diese Weise sturzsicher freistehend abgestellt werden kann.

Eine weitere Verbesserung der Diebstahlschutzwirkung der Stützeinrichtung kann erzielt werden, wenn, wie dies gemäß einer weiteren Ausführungsform der Erfindung vorgesehen ist, die Stützeinrichtung eine Einrichtung zur Betätigung zumindest einer Radbremse des Zweirades aufweist, die beim Ausklappen der Stütze aktiviert wird. Mit anderen Worten bedeutet dies, dass zumindest eine der Radbremsen des Zweirads beim Abstellen des Zweirads und Ausklappen der Seitenstütze automatisch so betätigt wird, dass das entsprechende Rad des Zweirads blockiert ist. Dadurch wird eine unbefugte Benutzung des Zweirades zusätzlich verunmöglicht, insbesondere wird auf diese Weise jedoch auch der Überraschungs- und Abschreckungseffekt beim Versuch des unbefugten Wegfahrens weiter erhöht.

Auf welche konkrete Weise dabei die Betätigung der Radbremse beim Ausklappen der Stütze erfolgt, ist für die Verwirklichung dieser Ausführungsform der Erfindung nicht maßgeblich, solange damit ein zuverlässiges und festes Zugreifen der Radbremse gewährleistet werden kann. So ist es beispielsweise möglich, die Radbremse, also beispielsweise eine Felgen-, Naben- oder Scheibenbremse, beim Ausklappen der Stütze über ein an der ausklappbaren Seitenstütze angelenktes Gestänge zu betätigen.

Gemäß einer besonders bevorzugten Ausführungsform erfolgt die Bremsenbetätigung jedoch mittels eines an der ausklappbaren Stütze angelenkten Bowdenzugs. Dies ist besonders vorteilhaft insofern, als ein Bowdenzug entlang des Rahmens eines Zweirads zwischen der an der Seitenstütze angeordneten Betätigungseinrichtung und der zu betätigenden Bremse besonders einfach und frei verlegt werden kann. Es kann sich dabei entweder um einen eigens zur Betätigung der Bremse mittels Seitenstütze zusätzlich verlegten Bowdenzug handeln; in Abhängigkeit von Rahmengeometrie und Bremsenanordnung ist es jedoch auch möglich, einen zur manuellen Betätigung der entsprechenden Bremse ohnehin bereits vorhandenen Bowdenzug am Zweiradrahmen so zu verlegen, dass er über die Betätigungseinrichtung an der Seitenstütze verläuft und somit dort zusätzlich angelenkt werden kann.

Um zu verhindern, dass ein durch die erfindungsgemäße Stützeinrichtung gesichertes Zweirad durch Wegtragen oder Abtransportieren und anschließende Demontage der verriegelten Stütze oder gar durch Demontage der Stütze an Ort und Stelle durch Unbefugte fahrbar gemacht werden kann, ist es gemäß einer weiteren bevorzugten Ausführungsform der Erfindung vorgesehen, dass zumindest ein Verbindungselement, mit dem die Stützeinrichtung lösbar am Zweiradrahmen befestigt werden kann, beispielsweise eine Verschraubung, im ausgeklappten Zustand der Stütze nicht zugänglich ist. Mit anderen Worten bedeutet dies, dass die so ausgeführte Stützeinrichtung nur im eingeklappten Zustand an den Zweiradrahmen montiert und ebenso ausschließlich im eingeklappten Zustand vom Zweiradrahmen abmontiert werden kann, was unbefugtes Abschrauben der Stütze im ausgeklappten und verriegelten Zustand damit verunmöglicht.

Um die Handhabung und die Betätigung der Stützeinrichtung weiter zu vereinfachen und zu erleichtern, ist es gemäß einer besonders bevorzugten, weiteren Ausführungsform der Erfindung vorgesehen, dass die Stützeinrichtung mit einer Anordnung zur Fernbetätigung der Schließeinrichtung versehen ist. Mit einer solchen Fernbetätigungsanordnung, die beispielsweise, jedoch keineswegs ausschließlich, im Bereich des Sattelrohres des Zweirads oder auch am Lenker angeordnet werden kann, lässt sich die Handhabung der Stützeinrichtung beim Entriegeln bzw. Aufschließen weiter entscheidend verbessern, da sich der Zweiradfahrer zum Aufschließen der ausgeklappten Seitenstütze nicht einmal mehr bücken muss, um die Schließeinrichtung der Seitenstütze zu entriegeln.

Auf welche Weise die Fernbetätigung der Schließeinrichtung dabei erfolgt, ist erfindungsgemäß unwesentlich, solange damit eine manipulationssichere Zuhaltung der Schließeinrichtung im ausgeklappten Zustand der Stütze erzielbar ist. So ist es beispielsweise vorstellbar, insbesondere bei Anordnung der Fernbetätigung im Bereich des Sattelrohrs, dass die Fernbetätigung auf rein mechanischem Wege erfolgt.

Wegen der andererseits jedoch wünschenswerten größeren Freiheit bei Anordnung und Bedienung der Fernbetätigung ist es gemäß einer besonders bevorzugten Ausführungsform jedoch vorgesehen, dass die Fernbetätigung elektrisch, elektronisch, magnetisch oder elektromagnetisch erfolgt. Dies bringt den zusätzlichen Vorteil mit sich, dass auf diese Weise bei geeigneter Ausgestaltung, insbesondere bei einer elektrischen oder elektronischen Fernbetätigung, sogar auf einen Schlüssel verzichtet werden kann, wobei dann die Entriegelung beispielsweise durch Eintippen einer PIN-Nummer am Lenker erfolgt.

Im Folgenden wird die Erfindung anhand einer lediglich ein Ausführungsbeispiel darstellenden Zeichnung näher erläutert.

Es zeigt die einzige:
- **Fig.**: in schematischer seitlicher Darstellung ein mit einem Ausführungsbeispiel einer erfindungsgemäßen Stützeinrichtung ausgestattetes Zweirad.

In der **Fig.** erkennt man einen Fahrradrahmen 1, Räder 2 und 3 sowie die unmittelbar hinter dem Tretlagergehäuse 4 angeordnete Stützeinrichtung 5 mit ausklappbarer Seitenstütze 6 sowie mit dem der Verriegelung der Seitenstütze 6 im ausgeklappten Zustand dienenden Schloss 7.

Das Schloss 7 ist dabei so ausgeführt, dass eine selbsttätige Verriegelung der Seitenstütze 6 bereits dann erfolgt, wenn die Seitenstütze 6 aus ihrer ersten Stellung *a* durch Ausklappen in die Stützstellung *b* verbracht wird. Dies bedeutet, dass ohne jeglichen weiteren Handgriff lediglich durch das Abstellen des Zweirads und das hierzu notwendige Ausklappen der Seitenstütze der einer Wegfahrsperre beim Kraftfahrzeug vergleichbare Effekt einer Verunmöglichung der Benutzung des Zweirads durch Unbefugte erzielt wird. Da dies bei jedem Abstellen des Zweirades automatisch erfolgt, ohne beim Zweiradfahrer eine Entscheidung für oder gegen das Abschließen zu erfordern, lässt sich auf diese Weise die statistische Wahrscheinlichkeit eines Fahrraddiebstahls über die Lebensdauer des Zweirads ganz entscheidend verringern.

Im Ergebnis wird deutlich, dass es dank der erfindungsgemäßen Kombination des reinen Abstellvorgangs mit der durch die Verriegelung der Seitenstütze im ausgeklappten Zustand erzielten Wegfahrsperre möglich geworden ist, einen ganz entscheidenden Beitrag zur Abschreckung Unbefugter und zur Verringerung der Häufigkeit von Zweiraddiebstählen zu leisten sowie den Komfort bei der Nutzung des Zweirads im Alltag gleichzeitig in erheblichem Maß zu verbessern.

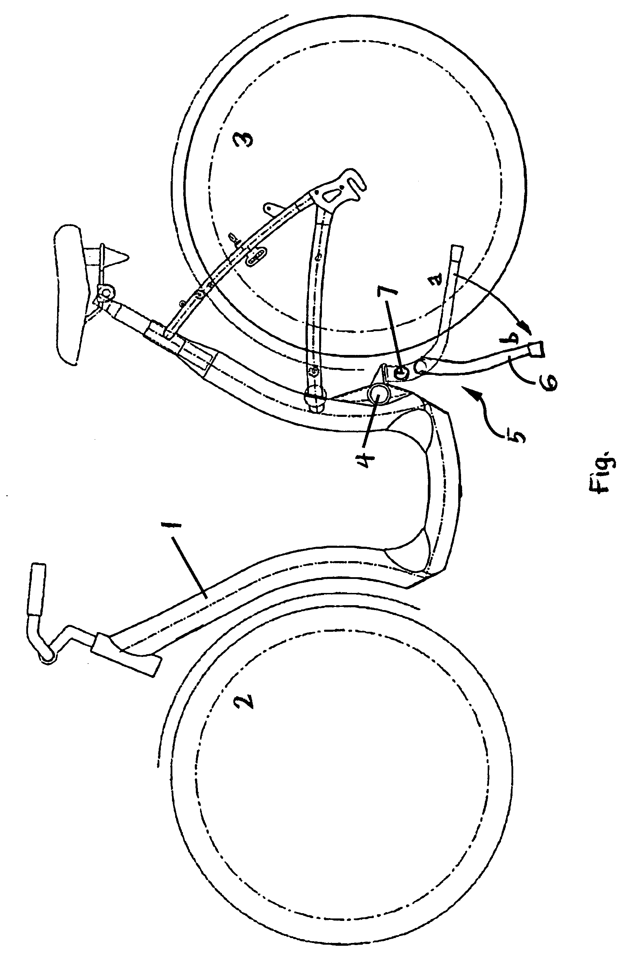

## Patentansprüche

1. Stützeinrichtung (5) mit ausklappbarer Stütze (6) zum Parken von Zweirädern, insbesondere von Fahrrädern,
**gekennzeichnet durch**
eine Schließeinrichtung (7) zum diebstahlschützenden Verriegeln der Stütze (6) in ihrer ausgeklappten Stellung.

2. Stützeinrichtung nach Anspruch 1,
**dadurch gekennzeichnet,**
**dass** die diebstahlschützende Verriegelung beim Ausklappen der Stütze (6) durch selbsttätiges Einrasten der Schließeinrichtung (7) erfolgt.

3. Stützeinrichtung nach Anspruch 1 oder 2,
**dadurch gekennzeichnet,**
**dass** die Stütze (6) zweibeinig ausgeführt ist.

4. Stützeinrichtung nach einem der Ansprüche 1 bis 3,
**gekennzeichnet durch**
eine Einrichtung zur Betätigung zumindest einer Radbremse des Zweirads mittels Ausklappen der Stütze (6).

5. Stützeinrichtung nach Anspruch 4,
**dadurch gekennzeichnet,**
**dass** die Bremsenbetätigung mittels eines an der Stütze (6) angelenkten Bowdenzugs erfolgt.

6. Stützeinrichtung nach einem der Ansprüche 1 bis 5,
**dadurch gekennzeichnet,**
**dass** zumindest ein lösbares Verbindungselement zur Befestigung der Stützeinrichtung am Zweiradrahmen (1) im ausgeklappten Zustand der Stütze (6) nicht zugänglich ist.

7. Stützeinrichtung nach einem der Ansprüche 1 bis 6,
**gekennzeichnet durch**
eine Anordnung zur Fernbetätigung der Schließeinrichtung (7).

8. Stützeinrichtung nach Anspruch 7,
**dadurch gekennzeichnet,**
**dass** die Fernbetätigung elektrisch, elektronisch, magnetisch oder elektromagnetisch erfolgt.
